# EUROPÄISCHE PATENTSCHRIFT

(11) **EP 1 216 865 B1**
(45) Veröffentlichungstag und Bekanntmachung des Hinweises auf die Patenterteilung: **13.10.2004**
(21) Anmeldenummer: 01126833.1
(22) Anmeldetag: 10.11.2001
(51) Int. Cl.: B60J 5/04

(54) **Leichtbautür für Kraftfahrzeuge**
Lightweight door for motor vehicles
Porte légère pour véhicules à moteur

(30) Priorität: 19.12.2000 DE 10063417
(43) Veröffentlichungstag der Anmeldung: 26.06.2002
(73) Patentinhaber: Wagon Automotive GmbH, 63857 Waldaschaff (DE)
(72) Erfinder: Hock, Michael, Dipl.-Ing., 63762 Grossostheim (DE)
(74) Vertreter: Gesthuysen, von Rohr & Eggert

(56) Entgegenhaltungen:
- EP-A- 0 997 331
- DE-A- 3 934 590
- DE-A- 19 616 788

## Beschreibung

Die Erfindung betrifft den Aufbau einer Leichtbautür für Kraftfahrzeuge, d. h. einer Rohbautür, die nach dem Lackierungsprozeß später mit weiteren Einbauten wie Fensterheber, Türinnenverkleidung etc. komplettiert wird, mit den Merkmalen des Oberbegriffs von Anspruch 1.

Die Gestaltung von Türen für Kraftfahrzeuge wird von verschiedenen Anforderungen bestimmt. Das sind z. B. statische Steifigkeitsanforderungen, dynamische Steifigkeitsanforderungen sowie Anforderungen an Bauraum und Anordnung von Einbauteilen. Statische Steifigkeitsanforderungen sind beispielsweise die Anforderungen an den Fensterrahmen bezüglich Biegung und Torsion und die Anforderungen an die Tür insgesamt bezüglich Absenkung und Überdrückung. Dynamische Steifigkeitsanforderungen resultieren aus den Sicherheitsanforderungen bei Frontal- und Seitencrash und weiteren Anforderungen an den Insassenschutz. Die Raumanforderungen betreffen den praktikablen Einbau und Betrieb von Anbau- und Funktionsteilen in oder an der Tür, die Einhaltung von Freiräumen für Montagearbeiten, die Einhaltung von Mindestabständen zu beweglichen Teilen, die Abstandshaltung paralleler Flächen, insbesondere für Dichtungszwecke, die Aufteilung des Innenraums der Tür in Trockenraum und Feuchtraum etc..

Die zuvor aufgelisteten Anforderungen an Türen für Kraftfahrzeuge sind prinzipiell unabhängig davon, auf welche konstruktive Weise die Tür des Kraftfahrzeugs gestaltet wird.

Bislang ist Stahlblech das verbreitetste Rohmaterial für Kraftfahrzeugtüren. Bekannt ist die konventionelle Technik einer Vollstanztür in Schalentechnik. Diese besteht aus zwei Stanzschalen, die miteinander und mit einem Glaskanalrahmen verbunden sind, wobei an der Innenschale später Einbaukomponenten angebaut werden.

Ein weiteres konventionelles Türkonzept wird durch die Rahmentür repräsentiert. Die Rahmentür besteht aus einem rollprofilierten und streckgebogenen Fensterrahmen aus Stahl, der mit einem Türkasten verschweißt oder verschraubt ist Der Türkasten selbst ist wiederum aus zwei Stanzschalen zusammengesetzt, die miteinander verbunden sind.

Hinsichtlich der Variantenbildung wesentlich zweckmäßiger ist eine Rahmentür mit einem im Türkasten verschweißten Fensterrahmen. Eine solche Stahltür für Kraftfahrzeuge ist beispielsweise aus der EP 0 476 351 A1 bekannt. Bei dieser Konstruktionsweise können für unterschiedliche Fahrzeugtypen viele gleiche Bauteile eingesetzt werden.

Es hat sich gezeigt, daß die zuvor erläuterte Baukastensystemtür auch aus Leichtmetall/Leichtmetallegierungen, insbesondere Aluminiumlegierungen hergestellt werden kann. Ein entsprechendes Beispiel, das den nächstkommenden Stand der Technik darstellt, ergibt sich aus der EP 0 997 331 A2. Die hier offenbarte Leichtbautür weist einen U-förmigen Tragrahmen auf, der aus einem Strangpreßprofil aus Aluminium besteht, das durch Streckbiegen in seine der Türform entsprechende U-Form gebogen ist. Scharnierverstärkung und Schloßverstärkung sind Aluminiumgußteile. Diese sind mit dem inneren Fensterschachtprofil verschweißt. Letzteres ist ebenfalls ein Strangpreßprofil aus Aluminium.

Der Lehre der Erfindung liegt nun das Problem zugrunde, die zuvor erläuterte Leichtbautür für Kraftfahrzeuge, die überwiegend Teile aus Leichtmetall/Leichtmetallegierungen verwendet, unter Berücksichtigung der besonderen Eigenheiten von Leichtmetall, insbesondere von Aluminium, konstruktiv zu optimieren.

Zu berücksichtigen sind die ganz unterschiedlichen Werkstoffeigenschaften von Stahl und Leichtmetall, insbesondere Aluminium. Im Fahrzeugbau verwendeter Stahl hat normalerweise eine höhere Streckgrenze als entsprechendes Aluminium-Walzblech. Aluminium ist in sehr komplexen und diversifizierten Strangpreßprofilen hoher maßlicher Qualität mit vergleichbar geringem wirtschaftlichen Aufwand erhältlich. Stahlprofile mit höherer Komplexität sind hingegen nur schwierig herzustellen und dementsprechend teuer und nur schwer zu variieren. Aufgrund der physikalischen Eigenschaften ist die Umformbarkeit durch Tiefziehen, Prägen der Biegen bei Aluminium-Walzblech schlechter als bei Stahlblech. Daraus resultieren bei Aluminiumblech größere Radien und geringere Freihaltsgrade bei konstruktiver Gestaltung der Bauteile. Entsprechendes gilt für andere Leichtmetalle und Leichtmetallegierungen, insbesondere auch für Magnesium.

Die zuvor erläuterten Randbedingungen lassen es nicht zu, die konstruktiven Konzepte von Stahltüren für Kraftfahrzeuge direkt auf Leichtmetalltüren zu übertragen. Die beanspruchte Leichtbautür für Kraftfahrzeuge mit den Merkmalen des Oberbegriffs von Anspruch 1 löst die zuvor aufgezeigte Problemstellung mit den Merkmalen des kennzeichnenden Teils von Anspruch 1. Wesentlich ist, daß hier eine insgesamt auf die Besonderheiten von Leichtmetall, insbesondere von Aluminium abgestellte Konstruktion realisiert worden ist. Die verwirklichte Konstruktion bedient sich einer Art verdeckter Stabwerksbauweise. Geschlossene Kammerprofile werden für Lastpfade von einwirkenden Kräften und Momenten verwendet. Die einzelnen Stäbe der Stabwerkskonstruktion werden in Tragwerksknoten zusammengeführt und dort verschweißt. Dadurch ergibt sich eine verwindungssteife Rahmenkonstruktion. Stärker belastete Bereiche, die mit der Stabwerksbauweise nicht optimal unterstützt werden können, insbesondere flächige Bereiche bei Scharnieren und Schloß werden spezifisch verstärkt. Die großflächigen Bereiche der Leichtbautür, die durch Kräfte und Momente nur gering belastet sind, können hingegen dünnwandig als Preßteile oder Tiefziehteile aus Leichtmetallblech, insbesondere Aluminiumblech, hergestellt werden. Dadurch verringert sich das Gewicht der Leichtbautür insgesamt stark, ohne die Steifigkeit negativ zu beeinträchtigen.

Weiter bevorzugte Ausgestaltungen und Weiterbildungen der grundlegenden Lehre der Erfindung sind Gegenstand der Unteransprüche.

Im folgenden wird die Erfindung anhand einer lediglich Ausführungsbeispiele darstellenden Zeichnung näher erläutert. In der Zeichnung zeigt
- Fig. 1: eine Sprengdarstellung einer erfindungsgemäßen Leichtbautür - vordere Seitentür -,
- Fig. 2: eine Ansicht des Tragrahmens mit Fensterrahmen der Fahrzeugtür aus Fig. 1, hier eingezeichnet die Schnitte der folgenden Figuren,
- Fig. 3: einen Schnitt III-III in Fig. 2,
- Fig. 4: einen Schnitt IV-IV in Fig. 2,
- Fig. 5: einen Schnitt V-V in Fig. 2,
- Fig. 6: einen Schnitt VI-VI in Fig. 2,
- Fig. 7: einen Schnitt VII-VII in Fig. 2,
- Fig. 8: einen Schnitt VIII-VIII in Fig. 2.

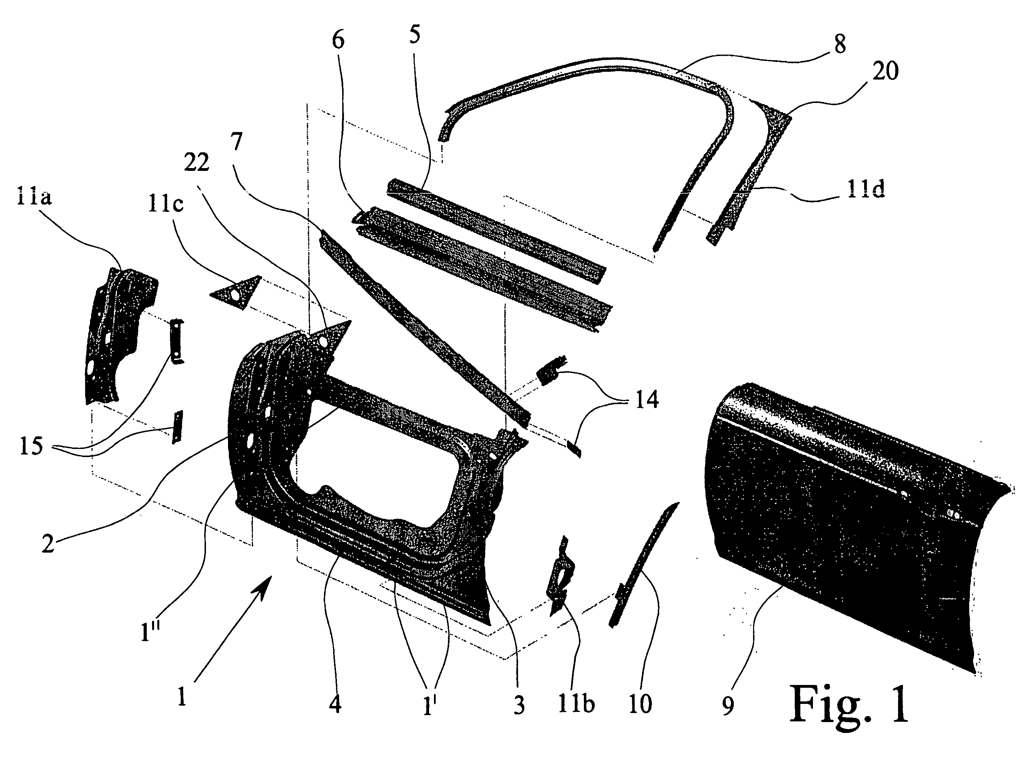

Die Figuren der Zeichnung sollen bei der nachfolgenden Erläuterung der Erfindung im Zusammenhang betrachtet werden. Fig. 1 der Zeichnung erläutert das Prinzip der Erfindung anhand einer vorderen Seitentür. In entsprechender Weise kann es auf eine hintere Seitentür übertragen werden, ggf. auch auf eine Hecktür oder Heckklappe.

Dargestellt ist eine Leichtbautür für Kraftfahrzeuge mit einem im wesentlichen U-förmigen Tragrahmen 1, wobei dieser Tragrahmen 1 aufweist einen einen U-Schenkel bildenden Scharnierträger 2, einen den anderen U-Schenkel bildenden Schloßträger 3 und einen den U-Steg bildenden Türboden 4. Ferner ist vorgesehen je ein den U-förmigen Tragrahmen 1 ergänzendes inneres und äußeres Fensterschachtprofil 5, 6 aus Leichtmetall/Leichtmetallegierungen, insbesondere aus Aluminium/Aluminiumlegierungen.

Die Fensterschachtprofile 5, 6 sind bei in einer Kraftfahrzeugkarosserie eingebauter Leichtbautür im wesentlichen in Fahrzeuglängsrichtung ausgerichtet. Sie sind endseitig mit dem Scharnierträger 2 und dem Schloßträger 3 des Tragrahmens 1 dauerhaft verbunden, insbesondere verschweißt. Für die Verschweißung von Leichtmetall, insbesondere Aluminium empfiehlt sich insbesondere das MIG-Schutzgasschweißen oder Laserschweißen mit entsprechenden Applikationen.

Weiter ist vorgesehen ein im Tragrahmen 1 angeordnetes Seitenaufprallschutzelement 7. Dieses ist nach bevorzugter Lehre, im Ausführungsbeispiel auch so dargestellt, im Tragrahmen 1 diagonal verlaufend angeordnet. Das Seitenaufprallschutzelement 7 ist dabei als Strangpreßprofil aus Leichtmetall/-Leichtmetallegierungen, insbesondere aus Aluminium/Aluminiumlegierungen ausgeführt und endseitig mit dem Tragrahmen 1 dauerhaft verbunden, insbesondere verschweißt.

Zu der Leichtbautür gemäß der Erfindung gehört ferner ein einstückig hergestellter Profil-Fensterrahmen 8 aus Leichtmetall/Leichtmetallegierungen, insbesondere aus Aluminium/Aluminiumlegierungen. Dieser ist endseitig jedenfalls mit dem inneren Fensterschachtprofil 5 dauerhaft verbunden, insbesondere verschweißt. Ferner gehört zu der Leichtbautür eine einteilige Türaußenbeplankung 9, die mit dem Tragrahmen 1 und dem äußeren Fensterschachtprofil 6 dauerhaft verbunden ist, hier insbesondere durch Umbördeln. Der Fensterrahmen 8 ist vorzugsweise ein stranggepreßtes und streckgebogenes Profil. Seine besondere Ausgestaltung ist Gegenstand einer parallelen Patentanmeldung deren Inhalt durch Bezugnahme auch Gegenstand der vorliegenden Offenbarung ist.

Fig. 1 der Zeichnung zeigt die Leichtbautür mit dem Tragrahmen 1 einteilig aus einem Blech mit minimaler Blechdicke aus Leichtmetall/ Leichtmetallegierungen, insbesondere aus Aluminium/Aluminiumlegierungen, insbesondere aus einem Aluminium-Walzblech. Dabei ist der Tragrahmen 1 als Preßteil oder Tiefziehteil ausgeführt. Die Blechdicke beträgt bei Aluminium bzw. einer Aluminiumlegierung dabei etwa 1,2 bis 1,8 mm, insbesondere ca. 1,6 mm.

Das dargestellte und bevorzugte Ausführungsbeispiel mit dem Tragrahmen 1 einteilig als Preßteil oder Tiefziehteil aus Aluminium-Walzblech zeichnet sich weiter dadurch aus, daß auch noch ein Teil des Türinnenblechs 1' flächig mit ausgebildet ist. Das führt im dargestellten und bevorzugten Ausführungsbeispiel dazu, daß der Tragrahmen 1 weiter einen die grundlegende U-Form schließenden, dem Türboden 4 gegenüberliegenden Querriegel 1" flächig ausbildet. Mit anderen Worten ist also der Tragrahmen 1 am freien Ende der U-Schenkel durch den Querriegel 1" zu einem O geschlossen, was die Gesamt-Verwindungssteifigkeit deutlich erhöht und optimiert.

Wenn im Verlaufe der Beschreibung davon die Rede ist, daß Elemente mit dem Scharnierträger 2 und dem Schloßträger 3 des Tragrahmens 1 verbunden sind, so wird dies bei der Realisierung des Querriegels 1" dadurch ergänzt, daß diese Teile auch mit dem Querriegel 1' unmittelbar, ggf. auch zusätzlich verbunden sein können oder sind. Insbesondere gilt dies für das innere Fensterschachtprofil 5, das unmittelbar am Querriegel 1 angebracht sein kann.

Die zuvor gegebene Erläuterung in Verbindung mit der Darstellung in Fig. 1 macht die Komplettkonstruktion der Leichtbautür aus Leichtmetall, insbesondere Aluminium oder einer Aluminiumlegierung, in Form einer Stabwerksbauweise deutlich.

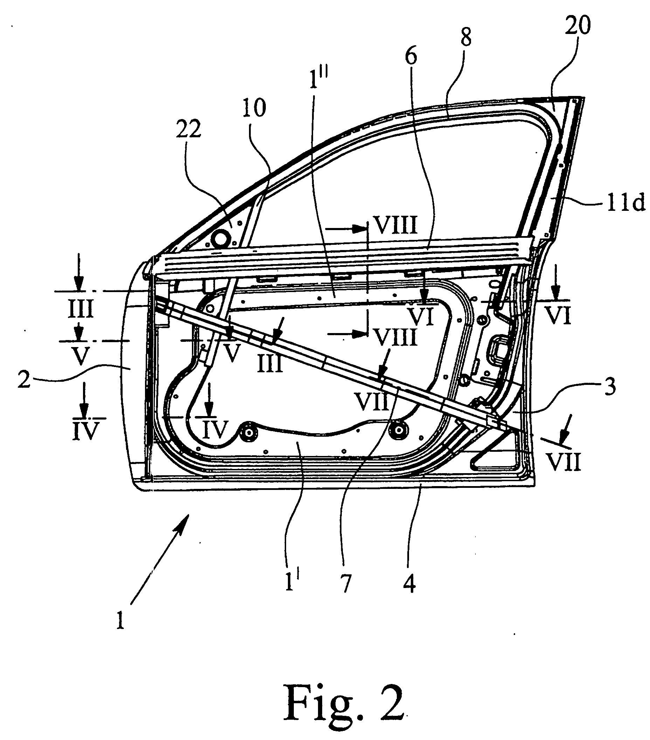

Bereits oben ist erläutert worden, daß sich bei der erfindungsgemäßen Konstruktion die Lastpfade von einwirkenden Kräften und Momenten möglichst in den Stäben des Stabwerks wiederfinden. Zur Einleitung der Kräfte in die Rahmenkonstruktion ist bei der erfindungsgemäßen Konstruktion zweckmäßigerweise verwirklicht, daß die Verbindungsbereiche der verschiedenen Bauelemente, nämlich Tragrahmen 1, inneres Fensterschachtprofil 5, Seitenaufprallschutzelement 7, Fensterrahmen 8, zur Ausbildung von Tragwerksknoten räumlich zusammenfallen. Nachfolgend wird das an einzelnen Beispielen noch näher beschrieben. Eine Fensterführung 10 zeigen Fig. 1 und 2.

Weiter ist vorgesehen, daß am Tragrahmen 1 in stärker belasteten Bereichen, insbesondere im Bereich von Tragwerksknoten, Verstärkungs- und Anschlußbleche 11 angeordnet und mit dem Tragrahmen 1 durch Stanznieten, Kleben und/oder, insbesondere, Schweißen verbunden sind. Man bekommt so bei insgesamt geringstmöglicher Blechdicke des Leichtmetallblechs in den großflächigen Abschnitten der Leichtbautür die notwendige Verstärkung in den hoch belasteten Bereichen. Dabei ist vorgesehen, daß auch die Verstärkungs- und Anschlußbleche 11 als Preßteile oder Tiefziehteile aus Leichtmetall/Leichtmetallegierungen, insbesondere aus Aluminium/ Aluminiumlegierungen ausgeführt sind.

Das dargestellte Ausführungsbeispiel zeigt als Verstärkungs- und Anschlußbleche 11 aus Aluminiumlegierungen zunächst eine Scharnierverstärkung 11a, alsdann eine Schloßverstärkung 11b, ein Spiegeldreieck 11c, ein Rahmenverstärkungsteil 11d sämtlich ausgeführt als Preßteil oder Tiefziehteil aus Leichtmetall, insbesondere Aluminium bzw. einer Aluminiumlegierung.

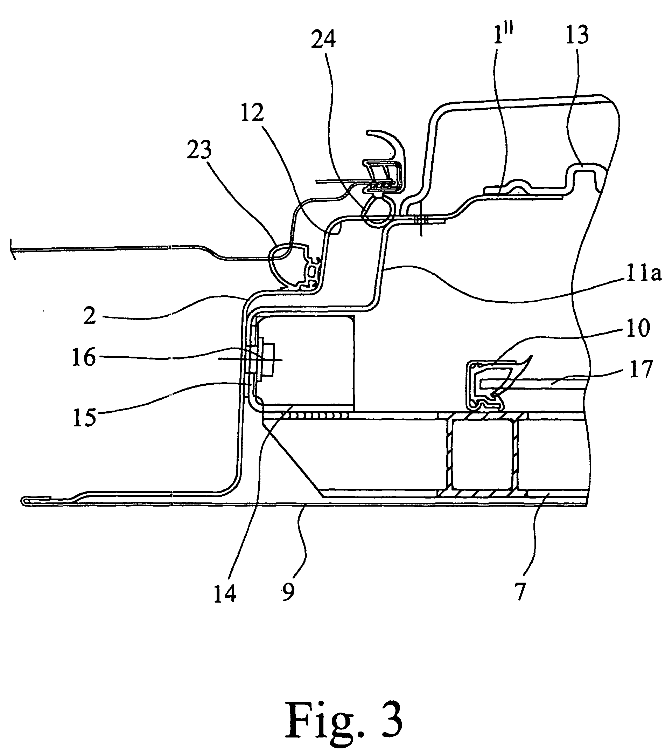

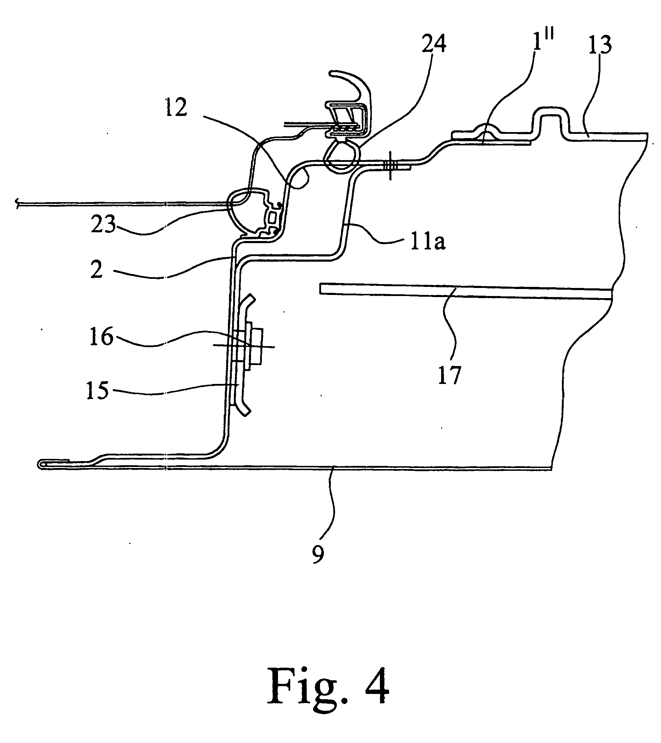

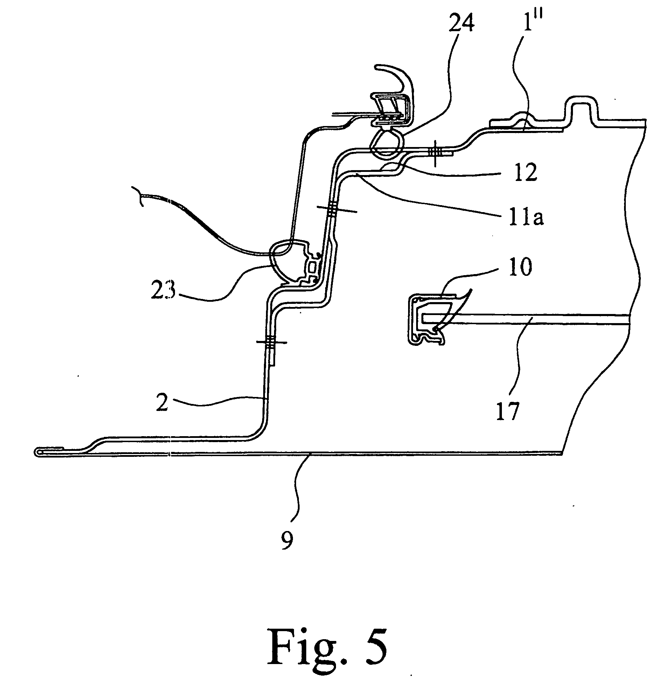

Fig. 1 und 2 zeigen angedeutet, Fig. 3, 4 und 5 zeigen genauer, daß das dortige Verstärkungs- und Anschlußblech 11 - Scharnierverstärkung 11a - teilweise mit dem Tragrahmen 1, nämlich hier dem Scharnierträger 2, Hohlkammern 12 bildet. Die Scharnierverstärkung 11a liegt in Fig. 5 zwischen den Scharnieren am Scharnierträger 2 i. W. flächenbündig auf. In Fig. 3 und Fig. 4 bilden diese beiden Bauteile jeweils eine Hohlkammer 12. Diese beiden Bauteile sind randseitig miteinander durch Stanznietung, Schweißung und/oder Klebung verbunden. Durch die Ausbildung der Hohlkammer 12 wird eine strukturgebende Verstärkung erzielt, weil insoweit ein Kastenprofil jedenfalls bereichsweise realisiert wird.

Für den Kraftfluß beim Frontalcrash kommt der Krafteinleitung und Fortleitung mittels des inneren Fensterschachtprofils 5 besondere Bedeutung zu. Der Querschnitt des inneren Fensterschachtprofils 5 sollte darauf ausgerichtet sein, möglichst ein Ausknicken quer zur Längsachse zu vermeiden. Dazu ist vorgesehen, daß das innere Fensterschachtprofil 5 als Kasten-Strangpreßprofil, vorzugsweise als Mehrkammerprofil mit mindestens zwei durch Stege getrennten Kammern ausgeführt ist. Dabei ist vorgesehen, daß das innere Fensterschachtprofil 5 exakt gerade ausgebildet und angeordnet ist. Diese Ausbildung unterstützt die Krafteinleitung dergestalt, daß in Längsrichtung wirkende Kräfte ohne Versatz an der Fahrgastzelle entlang geleitet werden. Das innere Fensterschachtprofil 5 leitet so bis zu 80 % der in Längsrichtung wirkenden Kräfte bei einem Frontalcrash weiter. Das Seitenaufprallschutzelement 7 übernimmt etwa bis zu 20 % der in Längsrichtung wirkenden Kräfte je nach Anstellung und Anbindung. Die dazu erforderliche Lösung der Anbindung der Enden des Seitenaufprallschutzelementes 7 wird später noch genauer erläutert.

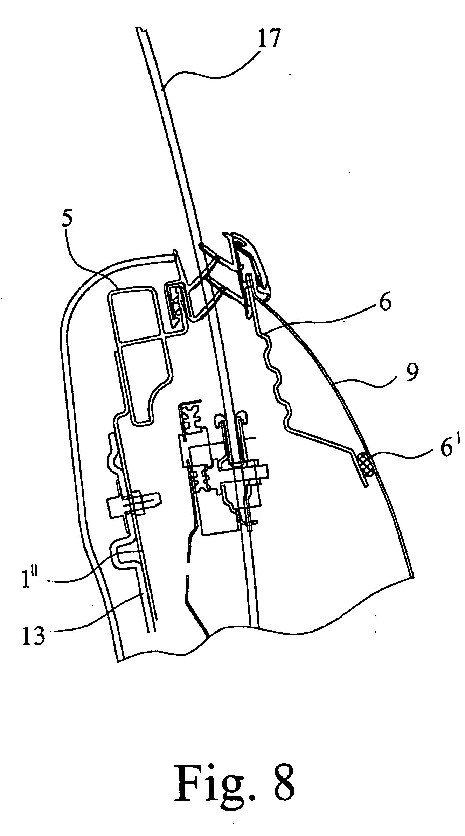

Das innere Fensterschachtprofil 5 hat im dargestellten Ausführungsbeispiel jedoch noch eine weitere Funktion. Wie Fig. 8 als Schnitt in diesem Bereich zeigt ist es mit einem in Längsrichtung verlaufenden zusätzlichen Flansch versehen, der hier die innere Fensterschachtdichtung trägt. Eine derartige Ausgestaltung des Fensterschachtprofils 5 ist bereits vorgeschlagen worden (DE 199 29 872 A1). Die dort offenbarten Besonderheiten der Ausbildung eines Flansches am Fensterschachtprofil sind unabhängig von der Herstellungstechnik und vom Werkstoff zu realisieren und können auch im vorliegenden Ausführungsbeispiel angewandt werden. Gerade die Ausbildung als Kasten-Strangpreßprofil aus Aluminium bietet flexible Möglichkeiten zur Ausbildung derartiger Flansche.

Man erkennt in Fig. 8 im übrigen die Anbindung des Fensterschachtprofils 5 an den Quearriegel 1" des Tragrahmens 1. Dieser Querriegel 1" bildet gleichzeitig die Anbringungsmöglichkeiten für ein später einzusetzendes Tür-Innenmodul 13, das in Fig. 8 lediglich angedeutet ist.

Zur Ausgestaltung des äußeren Fensterschachtprofils 6 kann ergänzt werden, daß dieses bevorzugt als Preßteil oder Tiefziehteil ausgeführt ist, natürlich ebenfalls aus Leichtmetall/Leichtmetallegierungen, insbesondere Aluminium/Aluminiumlegierungen, wobei nach bevorzugter Lehre auch dort in Längsrichtung verlaufende zusätzliche Flansche ausgebildet sind (Fig. 8). Einer der Flansche trägt eine Klebemittelraupe 6' zur Verklebung der Türaußenbeplankung 9.

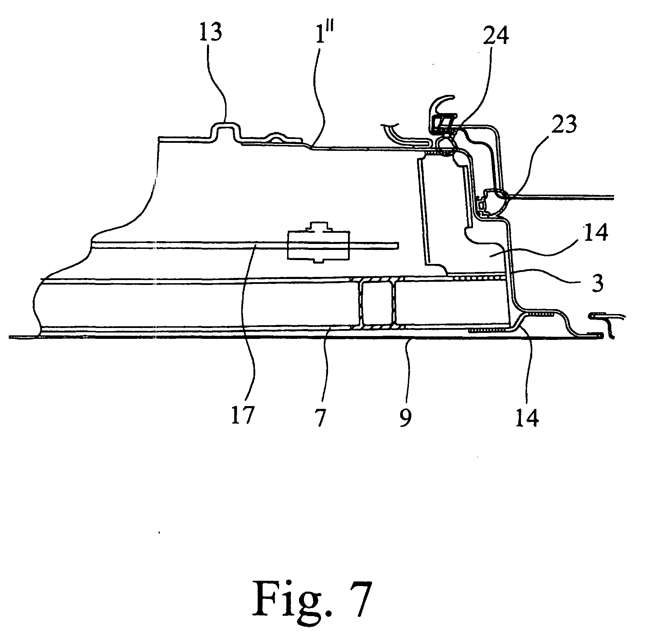

Weiter oben ist bereits darauf hingewiesen worden, daß das Seitenaufprallschutzelement 7 eine erhebliche Funktion nicht nur bei einem Seitenaufprall, sondern auch bei einem Frontalcrash hat, indem bis zu 20 % der in Längsrichtung auftretenden Kräfte über das Seitenaufprallschutzelement 7 weitergeleitet werden. Zur Befestigung des Seitenaufprallschutzelementes 7 im Tragrahmen 1 ist bei der dargestellten Seitentür vorgesehen, daß das Seitenaufprallschutzelement 7 endseitig am Tragrahmen 1 mit Konsolen 14 befestigt, insbesondere angeschweißt ist. Fig. 3 zeigt die Anbindung des Seitenaufprallschutzelementes 7 links oben in Fig. 2, Fig. 7 zeigt die Anbindung des Seitenaufprallschutzelementes 7 rechts unten in Fig. 2. Man erkennt jeweils die Konsolen 14. Zwei längs zum Seitenaufprallschutzelement 7 verlaufende Schweißnähte fixieren das Seitenaufprallschutzelement 7 an den Konsolen 14, die ihrerseits wieder am Tragrahmen 1 angeschweißt sind. Das wird nachfolgend noch etwas näher erläutert.

Das in Fig. 1 dargestellte Ausführungsbeispiel einer vorderen Seitentür zeigt am Scharnierträger 2 obere und untere Scharnierverstärkungsplatten 15, die ebenfalls aus Leichtmetall/Leichtmetallegierungen, insbesondere aus Aluminium oder einer Aluminiumlegierung bestehen. Diese sind insbesondere durch punktuelles Schweißen an diesen Stellen befestigt. Sie nehmen die erheblichen Kräfte auf, die durch die Scharniere hier in den einteiligen Tragrahmen 1 eingeleitet werden müssen. Das dargestellte Ausführungsbeispiel zeigt in Fig. 3 und Fig. 4 die Ausrüstung der Scharnierverstärkungsplatte 15 mit bereits eingepreßten, galvanisch beschichteten Stahlmuttern 16, die der Anbringung von Verbindlungsschrauben dienen.

Im dargestellten Ausführungsbeispiel ist nun vorgesehen, daß an der vorderen Seitentür das Seitenaufprallschutzelement 7 vom Scharnierträger 2 zum Schloßträger 3 abfallend oder waagerecht verläuft und daß hier die obere Scharnierveistärkungsplatte 15 L-förmig ausgeführt und mit dem freien L-Schenkel direkt mit dem hier befindlichen Ende des Seitenaufprallschutzelementes 7 verschweißt ist (Fig. 3). Die Scharnierverstärkungsplatte 15 mit ihrem freien L-Schenkel bildet so die Konsole 14.

Demgegenüber wäre bei einer hinteren Seitentür, bei der das Seitenaufprallschutzelement 7 vom Scharnierträger 2 zum Schloßträger 3 hin ansteigend oder waagerecht verläuft, die untere Scharnierverstärkungsplatte 15 L-förmig ausgeführt und mit dem freien L-Schenkel direkt mit dem hier befindlichen Ende des Seitenaufprallschutzelementes 7 verschweißt.

Dargestellt ist in Fig. 3 und Fig. 5 im übrigen noch das Fensterführungsprofil 10 und die Fensterscheibe 17.

Die Luftspalte zwischen den Anlageflächen der Scharnierverstärkungsplatten 15 und der großflächigen, die Hohlkammern 12 ausbildenden Scharnierverstärkung 11a werden vor der Durchführung einer beide verbindenden Punktschweißung vorzugsweise mit Hilfe eines speziellen Klebers flächig gefüllt, so daß die Bauteile auch miteinander verklebt sind.

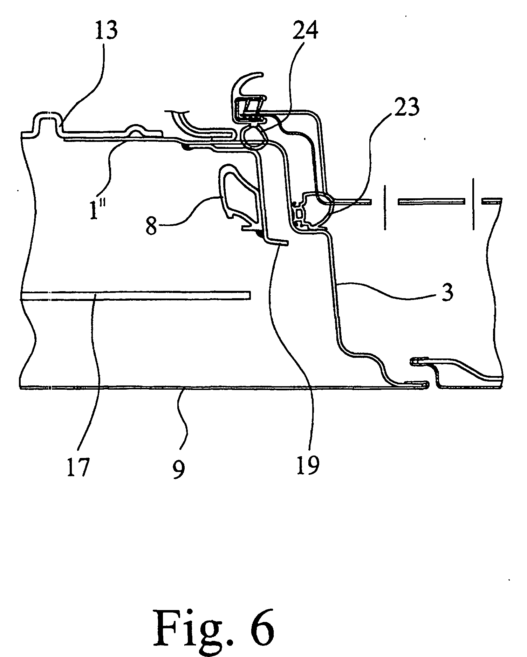

Die Steifigkeit der Leichtbautür insgesamt wird wesentlich dadurch erhöht, daß der Fensterrahmen 8 hochwirksam und steif mit dem Tragrahmen 1 verbunden wird. Dazu ist im dargestellten und bevorzugten Ausführungsbeispiel vorgesehen, daß der Fensterrahmen 8 sich endseitig bis vor das vordere und hintere Ende des inneren Fensterschachtprofils 5 erstreckt und dort mit dem Fensterschachtprofil 5 verschweißt ist. Dadurch taucht der Fensterrahmen 8 vergleichsweise weit in den Türschachtbereich ein. Dadurch ergibt sich ein ausreichender Hebelarm, um von außen eingebrachte Biegemomente wirksam in den Türrahmen 1 abzuleiten. Das dargestellte Ausführungsbeispiel (Fig. 6) zeigt dabei bei der Schloßverstärkung 11b noch einen zusätzlichen, sich nach oben erstreckenden Rahmenansatz 19, der zur Verschweißung mit dem hier befindlichen Ende des Fensterrahmens 8 dient. Fig. 6 zeigt, wie tief hier der Fensterrahmen 8 in den Türschachtbereich eingetaucht ist, man kann die Lage dieses Schnittes anhand von Fig. 2 nachvollziehen. Damit wird der Angriffspunkt für die Kräfte nahe an die Schloßposition herangeführt.

Bereits oben ist darauf hingewiesen worden, daß erfindungsgemäß die großflächigen Elemente der Leichtbautür mit geringer Blechdicke ausgeführt werden, daß aber in bestimmten Bereichen Verstärkungs- und Anschlußbleche 11 hinzugefügt und befestigt werden.

Fig. 1 zeigt insoweit weiter, daß der Fensterrahmen 8 an der Seite des Schloßträgers 3 durch ein langgestrecktes Rahmenverstärkungsteil 11d verstärkt ist. Es handelt sich um ein Preßteil oder Tiefziehteil aus dünnwandigem Leichtmetallblech (Leichtmetall, Leichtmetallegierung, insbesondere Aluminium, Aluminiumlegierung). Die Verbindungstechnik ist hier wie in den meisten Fällen eine Schweißverbindung. Bei dem dargestellten Ausführungsbeispiel ist übrigens ferner vorgesehen, daß das Rahmenverstärkungsteil 11d auch mit dem äußeren Fensterschachtprofil 6 durch Schweißung verbunden ist.

Das in Fig. 1 dargestellte Ausführungsbeispiel einer vorderen Seitentür zeigt ferner, daß das hier dargestellte Rahmenverstärkungsteil 11d ein oberes Winkelstück 20 des Fensterrahmens 8 integriert. Bei einer hinteren Seitentür könnte beispielsweise eine Abdeckung integriert sein, die einen Teil der B-Säule überdeckt.

Fig. 1 und Fig. 2 zeigen im Zusammenhang, daß hier am Tragrahmen 1, nämlich in Verlängerung des Scharnierträgers 2 oberseitig oberhalb des Fensterschachtprofils 6 ein Spiegeldreieck 22 ausgebildet ist. Ein weiteres, außenliegendes Spiegeldreieck 11c verstärkt partiell den Anbindeknoten eines Spiegels unter Verbindung mit dem Fensterrahmen 8, vorzugsweise durch Schweißung.

Fig. 1 und 2 zeigen weiter, daß der Fensterrahmen 8 am Spiegeldreieck 22/11c vorbeiläuft und in eine entsprechende Aufnahme am Scharnierträger 2 bzw. an der Scharnierverstärkung 11a am Tragrahmen 1 eintritt, um dort verschweißt zu werden. Man erkennt in Fig. 1 angedeutet, wie die Relativlage der beteiligten Bauteile ist, so daß die gewünschte stirnseitige Verschweißung des Fensterrahmens 8 mit dem inneren Fensterschachtprofil 5 und dem Tragrahmen 1, insbesondere dessen Scharnierträger 2, erfolgen kann.

Eine umlaufende, in Fig. 3 bis 7 angedeutete türseitige Hauptdichtung 23 kann allseits umlaufen, eine weitere umlaufende Dichtung 24 kann karosserieseitig angebracht sein und dann mit den inneren Dichtungsanlageflächen zusammenwirken. Die Dichtungen 23, 24 sind entspannt gezeichnet, sie werden natürlich auf das Spaltmaß zusammengedrückt.

Bei dem erfindungsgemäßen Konzept werden die Schweißnähte der Schweißverbindungen vorzugsweise als L-förmige Nähte ausgeführt, um die Steifigkeit zu erhöhen und einen Scharniereffekt zu vermeiden. Dies gilt vor allem für die Schweißnähte der die Hauptlast tragenden verdeckten Stabwerkskonstruktion.

Schließlich ist bei der erfindungsgemäßen Leichtbautür sowohl eine aus Blech gepreßte Türaußenbeplankung 9 als auch eine aus Kunststoff bestehende Türaußenbeplankung 9 anbringbar. Es kann also vorgesehen sein, daß die Türaußenbeplankung 9, wie im dargestellten Ausführungsbeispiel, als Ziehteil aus beispielsweise Aluminiumblech mit einer Stärke von ca. 1,0 mm hergestellt wird und mit dem Tragrahmen 1 und dem äußeren Fensterschachtprofil 6 durch Umbördeln und Kleben verbunden ist.

Die Kunststoff-Alternative besteht darin, daß die Türaußenbeplankung 9 mit dem Tragrahmen 1 und dem äußeren Fensterschachtprofil 6 durch Aufschieben/Aufrasten von Nut-Feder-Verbindungen und/oder durch Clipsverbindungen verbunden ist. Hierzu darf auf den Stand der Technik im allgemeinen hingewiesen werden, der eine Vielzahl von Alternativen zeigt.

Der Fensterrahmen 8 der dargestellten Leichtbautür muß nicht zwingend einstückig ausgeführt sein, er kann bedarfsweise auch aus zwei miteinander verbundenen Strangpreßprofilen hergestellt sein. Das bietet sich beispielsweise dann an, wenn man im Fensterbereich einen scharfen Winkel realisieren möchte, der dann durch Gehrungsschnitte und Verschweißung der Strangpreßprofile realisiert werden kann.

## Patentansprüche

1. Leichtbautür für Kraftfahrzeuge
mit einem im wesentlichen U-förmigen Tragrahmen (1) aus Leichtmetall/Leichtmetallegierungen, insbesondere Aluminium/Aluminiumlegierungen,
wobei dieser Tragrahmen (1) aufweist einen einen U-Schenkel bildenden Scharnierträger (2), einen den anderen U-Schenkel bildenden Schloßträger (3) und einen den U-Steg bildenden Türboden (4),
mit je einem den U-förmigen Tragrahmen (1) ergänzenden inneren und äußeren Fensterschachtprofil (5, 6) aus Leichtmetall/Leichtmetallegierungen, insbesondere Aluminium/Aluminiumlegierungen,
wobei die Fensterschachtprofile (5, 6) bei in der Kraftfahrzeugkarosserie eingebauter Leichtbautür im wesentlichen in Fahrzeuglängsrichtung ausgerichtet und endseitig mit dem Scharnierträger (2) und dem Schloßträger (3) dauerhaft verbunden, insbesondere verschweißt sind,
mit einem im Tragrahmen (1), vorzugsweise diagonal verlaufend, angeordneten Seitenaufprallschutzelement (7), das endseitig mit dem Tragrahmen (1) dauerhaft verbunden, insbesondere verschweißt ist, wobei das Seitenaufprallschutzelement (7) als Strangpreßprofil aus Leichtmetall/Leichtmetallegierungen, insbesondere Aluminium/Aluminiumlegierungen, ausgeführt ist,
mit einem, vorzugsweise einstückig hergestellten Fensterrahmen (8) aus Leichtmetall/Leichtmetallegierungen, insbesondere Aluminium/Aluminiumlegierungen,
**dadurch gekennzeichnet,**
**daß** der Fensterrahmen (8) endseitig jedenfalls mit dem inneren Fensterschachtprofil (5) dauerhaft verbunden, insbesondere verschweißt ist, und
**daß** der Tragrahmen (1) einteilig aus einem Blech aus Leichtmetall/Leichtmetallegierungen als Preßteil oder Tiefziehteil ausgeführt ist.

2. Leichtbautür nach Anspruch 1, **dadurch gekennzeichnet, daß** der Tragrahmen (1) einteilig aus einem Aluminium-Walzblech ausgeführt ist.

3. Leuchtbautür nach Anspruch 2, **dadurch gekennzeichnet, daß** der Tragrahmen (1) aus einem Aluminium-Walzblech mit einer Blechdicke von etwa 1,2 mm bis 1,8 mm, insbesondere von etwa 1,6 mm, ausgeführt ist.

4. Leichtbautür nach einem der voranstehenden Ansprüche, **dadurch gekennzeichnet, daß** der Tragrahmen (1) einen Teil eines Türinnenblechs (1') flächig mit ausbildet und/oder
daß der Tragrahmen (1) einen die grundlegende U-Form schließenden, dem Türboden (4) gegenüberliegenden Querriegel (1") flächig ausbildet.

5. Leichtbautür nach einem der voranstehenden Ansprüche, **dadurch gekennzeichnet, daß** die Verbindungsbereiche der verschiedenen Bauelemente, nämlich Tragrahmen (1), inneres Fensterschachtprofil (5), Seitenaufprallschutzelement (7), Fensterrahmen (8), zur Ausbildung von Tragwerksknoten räumlich zusammenfallen.

6. Leichtbautür nach einem der voranstehenden Ansprüche, **dadurch gekennzeichnet, daß** am Tragrahmen (1) in stärker belasteten Bereichen, insbesondere im Bereich von Tragwerksknoten, Verstärkungs- und Anschlußbleche (11) angeordnet und mit dem Tragrahmen (1) durch Stanznieten, Kleben und/oder Schweißen verbunden sind, wobei, vorzugsweise,
die Verstärkungs- und Anschlußbleche (11) als Preßteile oder Tiefziehteile ausgeführt sind und/oder
die Verstärkungs- und Anschlußbleche (11) teilweise mit dem Tragrahmen (1) Hohlkammern (12) bilden, und zwar insbesondere am Scharnierträger (2).

7. Leichtbautür nach einem der voranstehenden Ansprüche, **dadurch gekennzeichnet, daß** das innere Fensterschachtprofil (5) als Kasten-Strangpreßprofil, vorzugsweise mit mindestens zwei durch Stege getrennten Kammern, ausgeführt ist.

8. Leichtbautür nach einem der voranstehenden Ansprüche, **dadurch gekennzeichnet, daß** das äußere Fensterschachtprofil (6) als Preßteil oder Tiefziehteil ausgeführt und, vorzugsweise, mit mindestens einem in Längsrichtung verlaufenden zusätzlichen Flansch ausgebildet ist.

9. Leichtbautür nach einem der voranstehenden Ansprüche, **dadurch gekennzeichnet, daß** das Seitenaufprallschutzelement (7) endseitig am Tragrahmen (1) mit Konsolen (14) befestigt, insbesondere angeschweißt ist.

10. Leichtbautür nach einem der voranstehenden Ansprüche, **dadurch gekennzeichnet, daß** am Scharnierträger (2) obere und untere Scharnierverstärkungsplatten (15) aus Leichtmetall/Leichtmetallegierungen, insbesondere Aluminium/Aluminiumlegierungen, befestigt sind, insbesondere durch Schweißen befestigt sind, wobei, vorzugsweise,
an einer vorderen Seitentür das Seitenaufprallschutzelement (7) vom Scharnierträger (2) zum Schloßträger (3) hin abfallend oder waagerecht verläuft und die obere Scharnierverstärkungsplatte (15) L-förmig ausgeführt und mit dem freien L-Schenkel direkt mit dem Seitenaufprallschutzelement (7) verbunden, insbesondere verschweißt ist bzw.
an einer hinteren Seitentür das Seitenaufprallschutzelement (7) vom Scharnierträger (2) zum Schloßträger (3) hin ansteigend oder waagerecht verläuft und daß die untere Scharnierverstärkungsplatte (15) L-förmig ausgeführt und mit dem freien L-Schenkel direkt mit dem Seitenaufprallschutzelement (7) verschweißt ist.

11. Leichtbautür nach einem der voranstehenden Ansprüche, **dadurch gekennzeichnet, daß** der Fensterrahmen (8) sich endseitig bis vor das vordere und das hintere Ende des inneren Fensterschachtprofils (5) erstreckt und dort mit dem Fensterschachtprofil (5) verschweißt ist.

12. Leichtbautür nach einem der voranstehenden Ansprüche, **dadurch gekennzeichnet, daß** der Fensterrahmen (8) an der Seite des Schloßträgers (3) durch ein langgestrecktes Rahmenverstärkungsteil (11d) verstärkt ist, wobei, vorzugsweise,
das Rahmenverstärkungsteil (11d) als Preßteil oder Tiefziehteil aus Leichtmetall/ Leichtmetallegierungen, insbesondere Aluminium/Aluminiumlegierungen, ausgeführt und mit dem Fensterrahmen (8) durch Schweißung verbunden ist,
wobei, weiter vorzugsweise,
das Rahmenverstärkungsteil (11d) auch mit dem äußeren Fensterschachtprofil (6) verschweißt ist.

13. Leichtbautür nach Anspruch 12, **dadurch gekennzeichnet, daß** in das Rahmenverstärkungsteil (11d) ein oberes Winkelstück (20) des Fensterrahmens (8) integriert ist.

14. Leichtbautür nach einem der voranstehenden Ansprüche, **dadurch gekennzeichnet, daß** die Schweißnähte der Schweißverbindungen als L-Nähte ausgeführt sind.

15. Leichtbautür nach einem der voranstehenden Ansprüche, **dadurch gekennzeichnet, daß** eine Türaußenbeplankung (9) vorgesehen ist und
daß die Türaußenbeplankung (9) als Preßteil aus Leichtmetallblech ausgeführt und mit dem Tragrahmen (1) und dem äußeren Fensterschachtprofil (6) durch Umbördeln und Kleben, durch Schweißen und/oder durch Stanznieten paralleler Flansche verbunden ist oder
daß die Türaußenbeplankung (9) als Kunststofformteil ausgeführt und mit dem Tragrahmen (1) und dem äußeren Fensterschachtprofil (6) durch Aufschieben/Aufrasten von Nut-Feder-Verbindungen und/oder durch Clipsverbindungen verbunden ist.

## Claims

1. A lightweight door for motor vehicles
comprising an essentially U-shaped supporting frame (1) made from light metal/a light metal alloy in particular aluminum/an aluminum alloy,
wherein said supporting frame (1) comprises: a hinge support (2) forming one U-limb, a lock support (3) forming the other U-limb and a door bottom (4) forming the U-stay,
with an inner and an outer window gutter profile (5, 6) which is made from light metal/a light metal alloy in particular aluminum/an aluminum alloy and supplements the U-shaped supporting frame (1),
wherein if the lightweight door is installed in a motor vehicle body, the window gutter profiles (5, 6) are essentially aligned in longitudinal direction of the vehicle, with the ends being permanently connected in particular welded to the hinge support (2) and the lock support (3),
comprising a lateral impact protection element (7) arranged preferably running diagonally in the supporting frame (1), with the ends of said impact protection element (7) being permanently connected in particular welded to the supporting frame (1), wherein the lateral impact protection element (7) is an extruded profile made from light metal/a light metal alloy, in particular aluminum/an aluminum alloy,
comprising a preferably one-piece window frame (8) made from light metal/a light metal alloy, in particular aluminum/an aluminum alloy,
**characterized in**
**that** the ends of the window frame (8) in any case are permanently connected in particular welded to the inner window gutter profile (5), and
**that** the supporting frame (1) is made in one piece as a pressed part or a deep-drawn part, from a metal sheet of aluminum/an aluminum alloy.

2. Lightweight door according to claim 1, **characterized in that** the supporting frame (1) is made in one piece of aluminum sheet metal.

3. Lightweight door according to claim 2, **characterized in that** the supporting frame (1) is made of aluminum sheet metal having a sheet thickness of about 1.2 mm to 1.8 mm, in particular of about 1.6 mm.

4. Lightweight door according to any one of the previous claims, **characterized in that** the supporting frame (1) forms a part of an area-shaped inner skin (1') and/or
that the supporting frame (1) forms and area-shaped cross stay (1") which closes the basic U-shape and which is located opposite the door bottom (4).

5. Lightweight door according any one of the previous claims, **characterized in that** the connection regions of the various structural members, namely the supporting frame (1), inner door gutter profile (5), lateral impact protection element (7) and window frame (8), spatially coincide so as to form structural frame gussets.

6. Lightweight door according to any one of the previous claims, **characterized in that** in more heavily loaded areas, in particular in areas of the structural frame gussets, reinforcement and connection sheets (11) are arranged on the supporting frame (1) and permanently connected to said supporting frame (1) by press-riveting, bonding and/or welding, wherein, preferably,
the reinforcement and connection sheets (11) are formed as pressed parts or deep drawn parts and/or
the reinforcement and connection sheets (11) form hollow chambers partially with the supporting frame (1) and in particular on the hinge support (2).

7. Lightweight door according to any one of the previous claims, **characterized in that** the inner window gutter profile (5) is a box-section extrusion profile, preferably with at least two chambers separated by partition walls.

8. Lightweight door according to any one of the previous claims, **characterized in that** the outer window gutter profile (6) is formed as a pressed part or deep drawn part, preferably with at least an additional flange running in the longitudinal direction.

9. Lightweight door according to any one of the previous claims, **characterized in that** the ends of the lateral impact protection element (7) are permanently attached, preferably welded to the supporting frame (1) with brackets (14).

10. Lightweight door according any one of the previous claims, **characterized in that** upper and lower hinge point strengthening plates (15), made of light metal/a light metal alloy, in particular aluminum/an aluminum alloy, are attached, in particular by welding, to the hinge support (2), wherein preferably the lateral impact protection element (7) on a front side door is arranged so as to slope downward from the hinge support (2) to the lock support (3), or so as to be horizontal, and the upper hinge point strengthening plate (15) is L-shaped and the free L-limb is directly attached, in particular welded together with the lateral impact protection element (7) and accordingly
the lateral impact protection element (7) on a rear side door is arranged so as to be upward sloping or horizontal from the hinge support (2) to the lock support (3), and wherein the lower hinge point strengthening plate (15) is L-shaped, with its free L-lim b being welded to the lateral impact protection element (7).

11. Lightweight door according to any one of the previous claims, **characterized in that** the ends of the window frame (8) extend beyond the front and rear ends of the inner window gutter profile (5), where they are welded to the window gutter profile (5).

12. Lightweight door according to any one of the previous claims, **characterized in that** the window frame (8), on the side facing the lock support (3), is reinforced by an elongated frame reinforcement part (11d), wherein, preferably
the frame reinforcement part (11d) is a pressed part or deep-drawn part made of light metal/a light metal alloy, in particular aluminum/an aluminum alloy, and is connected to the window frame (8) by welding, wherein, further preferably
the frame reinforcement part (11d) is also welded to the outer window gutter profile (6).

13. Lightweight door according to claim 12, **characterized in that** an upper angular section (20) of the window frame (8) is integrated in the frame reinforcement part (11d).

14. Lightweight door according to any one of the previous claims, **characterized in that** the welding seams of the welded connections are formed as L-seams.

15. Lightweight door according to any one of the previous claims, **characterized in that** a door outer skin (9) is provided and that the door outer skin (9) is formed as a pressed piece of light sheet metal and is attached to the supporting frame (1) and the outer window gutter profile (6) by means of flanging and bonding, by welding and/or punch riveting parallel flanges or
that the door outer skin (9) is formed as a plastic molding and is attached to the supporting frame (1) and the outer window gutter profile (6) by means of sliding on/clamping of nut-spring connections and/or by clip connections.

## Revendications

1. Portière légère pour véhicule automobile, comportant un châssis support sensiblement en forme de U (1) en métal léger/alliages de métaux légers, notamment aluminium/alliages d'aluminium, ce châssis support (1) présentant un support de charnière (2) formant une branche en U, un support de serrure (3) formant l'autre branche en U et un fond de portière (4) formant la traverse du U, un profilé de compartiment de fenêtre (5, 6) intérieur et extérieur complétant le châssis support en forme de U (1) en métal léger/alliages de métaux légers, notamment aluminium/alliages d'aluminium, les profilés de compartiment de fenêtre (5, 6) étant orientés, lorsque la portière légère est montée dans la carrosserie du véhicule automobile, sensiblement dans le sens longitudinal du véhicule et étant reliés côté extrémité de manière permanente, notamment soudés, au support de charnière (2) et au support de serrure (3), un élément protecteur contre les chocs latéraux (7) disposé de préférence en extension diagonale, qui est relié côté extrémité de manière permanente, notamment soudé, au châssis support (1), l'élément de protection contre les chocs latéraux (7) étant réalisé sous forme de profilé coulé en continu en métal léger/alliage de métaux légers, notamment aluminium/alliages d'aluminium,
un encadrement de fenêtre (8) fabriqué de préférence en une pièce en métal léger/alliages de métaux légers, notamment aluminium/alliages d'aluminium,
**caractérisé en ce que**
l'encadrement de fenêtre (8) est dans tous les cas, côté extrémité, relié de manière permanente, notamment soudé, au profilé de compartiment de fenêtre intérieur (5) et que le châssis support (1) est réalisé en une pièce dans une tôle de métal léger/alliages de métaux légers sous forme de pièce de presse ou de pièce emboutie

2. Portière légère selon la revendication 1, **caractérisée en ce que** le châssis support (1) est réalisé en une pièce dans une tôle laminée d'aluminium.

3. Portière légère selon la revendication 2, **caractérisée en ce que** le châssis support (1) est réalisé dans une tôle laminée d'aluminium d'une épaisseur de tôle d'environ 1,2 mm à 1,8 mm, notamment d'environ 1,6 mm.

4. Portière légère selon l'une quelconque des revendications précédentes, **caractérisée en ce que** le châssis support (1) constitue par sa surface une partie d'une tôle intérieure de portière (1') et/ou que le châssis support (1) constitue par sa surface les traverses (1'') opposées au fond de portière (4) fermant la forme de base en U.

5. Portière légère selon l'une quelconque des revendications précédentes, **caractérisée en ce que** les zones de liaison des différents éléments de construction, à savoir le châssis support (1), le profilé de compartiment de fenêtre intérieur (5), l'élément de protection contre les chocs latéraux (7), l'encadrement de fenêtre (8) coïncident dans l'espace pour constituer des nodules du système porteur.

6. Portière légère selon l'une quelconque des revendications précédentes, **caractérisée en ce que** des tôles de renforcement et de raccordement (11) sont disposées sur le châssis porteur (1) dans les zones plus fortement sollicitées, notamment au niveau des nodules du système porteur, et sont reliées au châssis support par rivetage, collage et/ou soudage, alors que de préférence
les tôles de renforcement et de raccordement (11) sont réalisées sous forme de pièces de presse ou embouties et/ou
que les tôles de renforcement et de raccordement (11) forment en partie avec le châssis support (1) des chambres creuses (12), à savoir notamment sur le support de charnière (2).

7. Portière légère selon l'une quelconque des revendications précédentes, **caractérisée en ce que** le profilé de compartiment de fenêtre intérieur (5) est réalisé sous forme d'un profilé de boîtier coulé en continu, de préférence avec deux chambres séparées par des traverses.

8. Portière légère selon l'une quelconque des revendications précédentes, **caractérisée en ce que** le profilé de compartiment de fenêtre extérieur (6) est réalisé sous forme de pièce de presse ou de pièce emboutie et est réalisé de préférence avec au moins une bride supplémentaire s'étendant dans le sens longitudinal.

9. Portière légère selon l'une quelconque des revendications précédentes, **caractérisée en ce que** l'élément protecteur contre les chocs latéraux (7) est, côté extrémité, fixé, notamment soudé, sur le châssis porteur (1) par des consoles (14).

10. Portière légère selon l'une quelconque des revendications précédentes, **caractérisée en ce qu'**au support de charnière (2) sont fixées, notamment par soudage, des plaques inférieures et supérieures de renforcement de charnière (15) en métal léger/alliages de métaux légers, notamment aluminium/alliages d'aluminium,
alors que, sur une portière latérale avant, l'élément de protection contre les chocs latéraux (7) s'étend du support de charnière (2) au support de serrure (3) en descendant ou à l'horizontale et que la plaque supérieure de renforcement de charnière (15) est réalisée en forme de L et est reliée, notamment soudée, avec la branche en L libre directement à l'élément de protection contre les chocs latéraux (7) ou
que, sur une portière latérale arrière, l'élément de protection contre les chocs latéraux (7) s'étend du support de charnière (2) au support de serrure (3) en montant ou à l'horizontale et que la plaque inférieure de renforcement de charnière (15) est réalisée en forme de L et est reliée, notamment soudée, avec la branche en L libre directement à l'élément de protection contre les chocs latéraux (7).

11. Portière légère selon l'une quelconque des revendications précédentes, **caractérisée en ce que** l'encadrement de fenêtre (8) s'étend côté extrémité jusque devant l'extrémité avant et l'extrémité arrière du profilé de compartiment de fenêtre intérieur (5) et y est soudé au profilé de compartiment de fenêtre (5).

12. Portière légère selon l'une quelconque des revendications précédentes, **caractérisée en ce que** l'encadrement de fenêtre (8) est renforcé sur le côté du support de serrure (3) par une pièce de renforcement de châssis à extension longitudinale (11d), alors que, de préférence,
la pièce de renforcement de châssis (11d) est réalisée sous forme de pièce de presse ou de pièce emboutie en métal léger/alliages de métaux légers, notamment aluminium/alliages d'aluminium, et est reliée à l'encadrement de fenêtre (8) par soudage, et que de plus
la pièce de renforcement de châssis (11d) est aussi soudée au profilé de compartiment de fenêtre extérieur (6).

13. Portière légère selon l'une quelconque des revendications précédentes, **caractérisée en ce qu'**une pièce d'angle supérieure (20) de l'encadrement de fenêtre 8) est intégrée dans la pièce de renforcement de châssis (11d).

14. Portière légère selon l'une quelconque des revendications précédentes, **caractérisée en ce que** les cordons de soudure des raccords soudés se présentent sous forme de cordons en L.

15. Portière légère selon l'une quelconque des revendications précédentes, **caractérisée en ce qu'**il est prévu un placage extérieur de portière (9) et que le placage extérieur de portière (9) est réalisé sous forme de pièce de presse en tôle de métal léger et est relié au châssis support (1) et au profilé de compartiment de fenêtre extérieur (6) par bordurage et collage, par soudage et/ou par rivetage de brides parallèles ou
que le placage extérieur de portière (9) est réalisé sous forme d'une pièce de plastique moulé et relié au châssis support (1) et au profilé de compartiment de fenêtre extérieur (6) par enfoncement/enclenchement au moyen de joints à rainure et languette et/ou de raccords clippés.
